# EUROPEAN PATENT APPLICATION

(11) **EP 4 235 527 A1**
(43) Date of publication of application: **30.08.2023**
(21) Application number: 22178495.2
(22) Date of filing: 10.06.2022
(51) Int. Cl.: G06Q 10/00, G06Q 10/06, G06Q 10/08

(54) **SYSTEMS AND METHODS FOR MANAGING ROBOTS**

(30) Priority: 23.02.2022 WO PCT/CN2022/077479; 21.04.2022 WO PCT/CN2022/088167
(71) Applicant: Intelligent Cleaning Equipment Holdings Co., Ltd., Tortola (VG)
(72) Inventor: CHEN, Simon Nai Pong, Guangdong, 523400 (CN)
(74) Representative: Fraser, Thomas George

(57) **Abstract**

The present disclosure provides systems andmethodsforfleetmanagement. The presently disclosed systems and methods may be used to process operational data corresponding to an operation or a status of one or more robots or machines, detect one or more changes or deviations in operation or expected behavior for the one or more robots or machines or one or more components of the one or more robots or machines, and generate one or more maintenance or repair instructions for at leastone robotor machine or component based at least in part on a priority of maintenance associated with the at least one robot or machine or component.

## Description

### CROSS REFERENCE

This application claims priority to International Application No. PCT/CN2022/077479 filed on February 23, 2022, which application is incorporated herein by reference in its entirety for all purposes.

### BACKGROUND

Robots and/or machines may be used to perform tasks, provide services, and navigate environments autonomously or semi-autonomously. Multiple robots and/or machines may be distributed across different geographic locations and may interface or communicate with one or more central servers.

### SUMMARY

The present disclosure relates generally to robot and/or machine management and, more particularly, to systems and methods for controlling and supervising a plurality of robots and/or machines using one or more servers. The present disclosure provides, in multiple aspects and embodiments, an interconnected network of robots and/or machines that can be individually managed, tracked, and serviced/maintained with the aid of one or more central servers. The one or more central servers can interface seamlessly with various business or financial applications or sub-systems to collectively enable a flexible business solution for managing robots and/or machines, coordinating logistics of machine repair, service, or maintenance, and tracking financial information or transactional data associated with the usage or the operation of the robots and/or machines.

The present disclosure addresses various limitations and shortcomings of conventional fleet management systems by providing systems and methods for managing multiple robots and/or machines in parallel based on the operational data obtained for each respective robot and/or machine and/or the operational data collectively obtained from multiple robots and/or machines (e.g., a plurality of robots and/or machines in a fleet). Unlike other commercially available systems, the presently disclosed fleet management systems may intelligently coordinate and prioritize maintenance or repair of robots, machines, or robot / machine components based on robot / machine operational data or component operational data. In some cases, the fleet management systems disclosed herein may provide a streamlined user experience allowing operators to easily scan codes associated with a faulty robot or machine or component to initiate a repair or maintenance procedure. In some cases, the fleet management systems disclosed herein may also seamlessly interface with other applications or sub-systems to permit tracking of robot or machine usage and repair or maintenance procedures. In some cases, the fleet management systems disclosed herein may be configured to control an operation of one or more robots and/or machines based on the operational data for the one or more robots and/or machines, or based on financial information associated with a usage or an operation of the one or more robots and/or machines.

The systems and methods of the present disclosure may be implemented to enable real time fleet management for a plurality of robots and/or machines. In one aspect, the present disclosure provides a system for fleet management. The system may comprise one or more servers configured to execute a method for managing one or more robots and/or machines. In some cases, the one or more robots may comprise a plurality of robots and/or machines forming a fleet or a swarm.

In one aspect, the method may comprise (a) receiving and processing operational data corresponding to an operation or a status of one or more robots and/or machines at a central server that is in communication with the one or more robots and/or machines, wherein the processing of the operational data comprises comparing (i) the operational data to (ii) one or more reference values or thresholds associated with the operation or the status of the one or more robots and/or machines or one or more components of the one or more robots and/or machines; (b) detecting, based at least in part on the comparison in (a), one or more changes or deviations in operation or expected behavior for the one or more robots and/or machines or the one or more components of the one or more robots and/or machines, wherein the one or more changes or deviations indicate or identify at least one robot, machine, or component to be serviced, maintained, or replaced; and (c) generating and transmitting one or more maintenance or repair instructions for the at least one robot, machine, or component based at least in part on a priority of maintenance associated with the at least one robot, machine, or component.

In some embodiments, (c) further comprises prioritizing the one or more maintenance or repair instructions or adjusting the priority of maintenance based on the operational data. In some embodiments, (c) further comprises prioritizing the one or more maintenance or repair instructions or adjusting the priority of maintenance based on a condition or a state of the at least one component to be serviced or replaced. In some embodiments, (c) further comprises prioritizing the one or more maintenance or repair instructions or adjusting the priority of maintenance based on a level or a severity of component wear or breakdown.

In some embodiments, the method may further comprise, prior to (a), providing one or more scannable codes that are associated with or affixable to the one or more robots and/or machines or the one or more components of the one or more robots and/or machines. In some embodiments, the method may further comprise, subsequent to (b), assigning one or more entities to service or maintain the at least one robot, machine, or component based at least in part on the one or more changes or deviations detected in (b). In some embodiments, the one or more entities comprise one or more maintenance or service technicians.

In some embodiments, the method may further comprise identifying or locating a service history for the one or more robots and/or machines or the one or more components of the one or more robots and/or machines when a user or an operator of the one or more robots and/or machines scans the one or more scannable codes. In some embodiments, the one or more scannable codes comprise one or more robot-specific, machine-specific or component-specific codes that are unique to the one or more robots and/or machines or the one or more components of the one or more robots and/or machines. In some embodiments, the one or more scannable codes comprise a bar code, a quick response (QR) code, an April tag, a unique identifier, or a serial number.

In some embodiments, the operational data comprises information on a battery level or a charge status of the one or more robots and/or machines and/or the one or more components of the one or more robots and/or machines. In some embodiments, the operational data comprises fault information or alarm information for the one or more robots and/or machines and/or the one or more components of the one or more robots and/or machines. In some embodiments, the fault information is generated automatically by the one or more robots and/or machines. In some embodiments, the fault information is manually reported or generated by a user or an operator of the one or more robots and/or machines. In some embodiments, the operational data comprises information on workrecords, a cleaning path, or a cleaning performance for the one or more robots and/or machines. In some embodiments, the operational data comprises a total time of use or operation for the one or more components. In some embodiments, the operational data is periodically generated or compiled by the one or more robots and/or machines for transmission or upload to the central server. In some embodiments, the operational data is transmitted from the one or more robots and/or machines to the central server at one or more predetermined or periodic time intervals. In some embodiments, the operational data is transmitted from the one or more robots and/or machines to the central server at one or more time intervals that vary according to a historical usage or a total operational time of the one or more robots and/or machines.

In some embodiments, the one or more reference values or thresholds correspond to a total operational time for the one or more robots and/or machines or the one or more components of the robots or machines. In some embodiments, the total operational time is determined separately for each component of a robot and/or machine.

In some embodiments, the method may further comprise, subsequent to (b), adjusting an operation of the one or more robots and/or machines to compensate for or mitigate a suboptimal performance or operation of the at least one robot, machine, or component experiencing the one or more changes or deviations. In some embodiments, the method may further comprise, subsequent to (c), tracking and providing maintenance or service status information to a user or an operator of the one or more robots and/or machines. In some embodiments, tracking and providing maintenance or service status information comprises estimating an amount of time needed to maintain, repair, or service the at least one robot, machine, or component.

In some embodiments, (c) further comprises prioritizing the one or more maintenance or repair instructions or adjusting the priority of maintenance based on the estimated amount of time needed to maintain, repair, or service the at least one robot, machine, or component in order to reduce robot or machine downtime and maximize robot operational time. In some embodiments, the method may further comprise, subsequent to (c), providing or ordering a replacement robot or machine or one or more replacement components for a user or an operator of the one or more robots and/or machines experiencing the one or more changes or deviations. In some embodiments, the method may further comprise, subsequent to (c), adjusting the priority of maintenance for the at least one robot, machine, or component based on (i) additional operational data received for the at least one robot, machine, or component and/or (ii) additional operational data received for another robot, machine, or component. In some embodiments, the method may further comprise, subsequent to (c), adjusting one or more motion paths or cleaning routines for the one or more robots and/or machines based on the one or more changes or deviations detected in (b). In some embodiments, the one or more changes or deviations comprise one or more faults or failures for the one or more robots and/or machines or the one or more components of the one or more robots and/or machines.

In some embodiments, (c) further comprises transmitting the one or more maintenance or repair instructions to the central server. In some embodiments, the central server is configured to provide one or more software updates to the one or more robots and/or machines to address or mitigate the one or more changes or deviations detected in (b). In some embodiments, (c) further comprises transmitting the one or more maintenance or repair instructions to a repair or maintenance station.

In some embodiments, the one or more robots and/or machines are configured to autonomously travel to and/or interface with the repair or maintenance station in order to receive or undergo one or more repair, maintenance, or service operations. In some embodiments, the one or more maintenance or repair instructions are generated based on one or more pictures or video s provided from a user or an operator of the one or more robots and/or machines to the central server. In some embodiments, the one or more pictures or videos may indicate or show the one or more changes or deviations in operation or expected behavior for the one or more robots and/or machines or the one or more components of the one or more robots and/or machines. In some embodiments, the one ormore maintenance or repair instructions are generated based on (i) robot, machine, or component data collected by the one or more robots and/or machines using one or more sensors and/or (ii) one or more predetermined parameters associated with the robot, machine, or component data. In some embodiments, the robot, machine, or component data may comprise information on battery level or usage, motor temperature, or current and voltage levels for the one or more robots and/or machines or the one or more components of the one or more robots and/or machines.

In some embodiments, the method may further comprise, subsequent to (b), scheduling one or more service appointments for the one or more robots and/or machines based on (i) the operational data and/or (ii) a user request to schedule one or more service or maintenance sessions. In some embodiments, the one or more robots and/or machines comprise a cleaning robot or machine, an autonomous vehicle, a rover, a drone, a shuttle for transporting humans or objects, or a humanoid robot or machine. In some embodiments, the one or more robots and/or machines are configured to operate in an indoor environment or a building. In some embodiments, the one or more robots and/or machines are configured to operate in and around peripheral areas of a building. In some embodiments, the one or more robots and/or machines are configured to operate in an outdoor environment. The outdoor environment may be external to a building. The outdoor environment may include, for example, private roads and/or public roads.

In some embodiments, the central server is configured to instruct the one or more robots and/or machines to automatically shut down or restrict a performance of one or more tasks or services when a customer renting or leasing the one or more robots misses a payment deadline.

In some embodiments, the method may further comprise managing or updating a customer account associated with the one or more robots and/or machines based on the operational data processed in (a), the one or more changes or deviations in operation or expected behavior detected in (b), or the one or more maintenance or repair instructions generated in (c). In some embodiments, the method may further comprise managing or updating financial information, payment information, or billing information associated with the one or more robots and/or machines based on the operational data processed in (a), the one or more changes or deviations in operation or expected behavior detected in (b), or the one or more maintenance or repair instructions generated in (c).

In some embodiments, the central server is configured to calculate and report a usage time for the one or more robots and/or machines and/or the one or more components of the one or more robots when a service or maintenance technician scans the one or more scannable codes.

In some embodiments, the one or more robots and/or machines comprise one or more position sensors for sensing a position and/or an orientation of the one or more robots and/or machines. In some embodiments, the operational data comprises information on the position and/or the orientation of the one or more robots and/or machines.

Another aspect of the present disclosure provides a non-transitory computer readable medium comprising machine executable code that, upon execution by one or more computer processors, implements any of the methods above or elsewhere herein.

Another aspect of the present disclosure provides a system comprising one or more computer processors and computer memory coupled thereto. The computer memory comprises machine executable code that, upon execution by the one or more computer processors, implements any of the methods above or elsewhere herein.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### INCORPORATION BY REFERENCE

All publications, patents, and patent applications mentioned in this specification are herein incorporated by reference to the same extent as if each individual publication, patent, or patent application was specifically and individually indicated to be incorporated by reference. To the extent publications and patents or patent applications incorporated by reference contradict the disclosure contained in the specification, the specification is intended to supersede and/or take precedence over any such contradictory material.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings (also "Figure" and "FIG." herein), of which:
**FIG. 1** schematically illustrates a computer system that is programmed or otherwise configured to implement any of the methods provided herein.
**FIG. 2** schematically illustrates a plurality of robots and/or machines in communication with a central server, in accordance with some embodiments.
**FIG. 3** schematically illustrates a platform for collecting and processing operational data of one or more robots and/or machines, in accordance with some embodiments.
**FIG. 4** schematically illustrates a process for servicing a robot or machine.
**FIG. 5** schematically illustrates a process for swapping out a robot or machine.
**FIG. 6** schematically illustrates a system for managing a fleet of robots and/or machines, in accordance with some embodiments.

### DETAILED DESCRIPTION

While various embodiments of the invention have been shown and described herein, it will be obvious to those skilled in the art that such embodiments are provided by way of example only. Numerous variations, changes, and substitutions may occur to those skilled in the art without departing from the invention. It should be understood that various alternatives to the embodiments of the invention described herein may be employed.

Whenever the term "at least," "greater than," or "greater than or equal to" precedes the first numerical value in a series of two or more numerical values, the term "at least," "greater than" or "greater than or equal to" applies to each of the numerical values in that series of numerical values. For example, greater than or equal to 1, 2, or 3 is equivalent to greater than or equal to 1, greater than or equal to 2, or greater than or equal to 3.

Whenever the term "no more than," "less than," or "less than or equal to" precedes the first numerical value in a series of two or more numerical values, the term "no more than," "less than," or "less than or equal to" applies to each of the numerical values in that series of numerical values. For example, less than or equal to 3, 2, or 1 is equivalent to less than or equal to 3, less than or equal to 2, or less than or equal to 1.

The term "real time" or "real-time," as used interchangeably herein, generally refers to an event (e.g., an operation, a process, a method, a technique, a computation, a calculation, an analysis, a visualization, an optimization, etc.) that is performed using recently obtained (e.g., collected or received) data. In some cases, a real time event may be performed almost immediately or within a short enough time span, such as within at least 0.0001 millisecond (ms), 0.0005 ms, 0.001 ms, 0.005 ms, 0.01 ms, 0.05 ms, 0.1 ms, 0.5 ms, 1 ms, 5 ms, 0.01 seconds, 0.05 seconds, 0.1 seconds, 0.5 seconds, 1 second, or more. In some cases, a real time event may be performed almost immediately or within a short enough time span, such as within at most 1 second, 0.5 seconds, 0.1 seconds, 0.05 seconds, 0.01 seconds, 5 ms, 1 ms, 0.5 ms, 0.1 ms, 0.05 ms, 0.01 ms, 0.005 ms, 0.001 ms, 0.0005 ms, 0.0001 ms, or less.

### Fleet Management

In an aspect, the present disclosure provides systems and methods for fleet management. As used herein, fleet management may refer to the management of multiple robots or machines. The multiple robots may be configured to operate individually or collectively as a fleet or a swarm of robots. The term "fleet" as used herein may refer to any grouping or collection of a plurality of robots or other machines that are controllable by a human or a computer system.

### Robots / Machines

The systems and methods disclosed herein may be used to manage one or more robots and/or machines. In some embodiments, a machine may comprise an autonomous, semi-autonomous, and/or non-autonomous robot or machine. In some embodiments, a robot may comprise an autonomous, semi-autonomous, and/or non-autonomous machine or robot. In some embodiments, a robot may be referred to interchangeably as a machine, and a machine may be referred to interchangeably as a robot. In some cases, a robot may be equivalent to a machine, and vice versa. Alternatively, a robot may comprise a system that is capable of operating autonomously or semi-autonomously, and a machine may comprise a non-autonomous system that is capable of being operated by a human or another machine or robot.

In any of the embodiments described herein, the one or more robots or machines may be configured to operate individually or collectively as a fleet or a swarm of robots or machines. The term "fleet" as used herein may refer to any grouping or collection of a plurality of robots or other machines that are independently or jointly controllable by a human or a computer system. The fleet may comprise one or more robots and/or one or more machines. The one or more robots and/or the one or more machines may comprise a non-autonomous, semi-autonomous, or autonomous robot or machine that can be controlled either locally or remotely. The robots and/or machines in the fleet may be controlled by a human operator and/or a computer. In any of the embodiments described herein, the fleet may comprise a combination of robots and/or machines. In any of the embodiments described herein, the fleetmay comprise a combinationof autonomous, semi-autonomous, and/or non-autonomous robots and/or machines.

In some embodiments, the robots or machines may comprise a non-autonomous robot or machine. Such non-autonomous robot or machine may not or need not comprise or have autonomous navigation functions or capabilities. In some cases, such non-autonomous robot or machine may be configured to operate based on one or more inputs, commands, or instructions provided by a human operator. The one or more inputs, commands, or instructions may comprise a physical motion to move the robot or machine, an auditory communication, or a virtual input or selection of an action or movement to be performed by the robot or machine.

In some embodiments, the robots or machines may comprise, for example, a non-autonomous vehicle, a semi-autonomous vehicle, or an autonomous vehicle, a rover, a drone, or a shuttle for transporting humans or objects. In some cases, the robots or machines may comprise a humanoid robot or a non-humanoid robot. In some cases, the robots or machines may comprise a cleaning robot (e.g., a floor scrubber or a vacuum). In some cases, the robots or machines may be configured to operate in an indoor environment (e.g., a building). In other cases, the robots or machines may be configured to operate in an outdoor environment.

### Management

The systems and methods disclosed herein may be used to manage a plurality of robots and/or machines. Managing the plurality of robots and/or machines may involve controlling an operation of the robots and/or machines, tracking the usage or the status of the robots and/or machines, monitoring robot and/or machine performance, or recording and updating one or more records associated with the robots and/or machines. The records may comprise, for example, user account records or financial records relating to a transaction (e.g., a sale or a lease) involving the robots and/or machines. In some cases, managing the plurality of robots and/or machines may involve programming or directing the robots and/or machines to navigate an environment and perform one or more tasks while navigating the environment. The robots and/or machines may be programmed or directed to navigate various environments autonomously or semi-autonomously according to a predetermined or adjustable motion path or motion logic. In some cases, the robots and/or machines may be programmed to navigate different environments differently, or to navigate a same environment in different ways depending on the presence of obstacles or the time of day.

In some embodiments, managing the robots and/or machines may comprise obtaining operational data associated with the robots and/or machines and detecting changes or deviations in expected robot or machine performance or behavior. In some cases, managing the robots and/or machines may comprise coordinating, prioritizing, and/or scheduling one or more service, maintenance, or repair tasks based on the operational data or the detected changes in expected robot or machine performance or behavior.

### System

In one aspect, the present disclosure provides a system for fleet management The system may comprise one or more servers and/or one or more processing units for managing, controlling, and/or monitoring one or more robots and/or machines. In some cases, the one or more servers may comprise the one or more processing units. The one or more servers and/or one or more processing units may be located remote from the one or more robots and/or machines and the environment in which the one or more robots and/or machines are operating. The systems described herein may be used to manage, control, and/or monitor robots and/or machines. The terms robot(s) and machine(s) may be used interchangeably as described elsewhere herein.

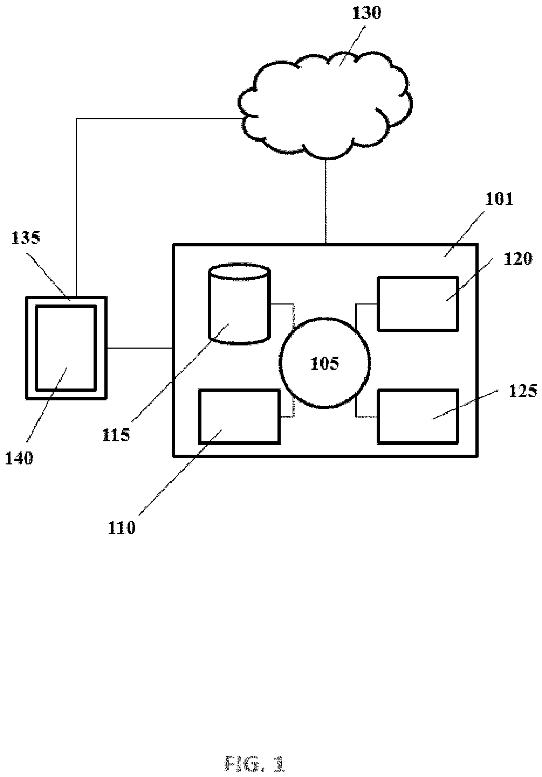

**FIG. 1** schematically illustrates an example of a system 101 that may be programmed or otherwise configured to implement methods of the present disclosure, including various methods for managing robots and/or machines or fleets of robots and/or machines. The system 101 may comprise a computer system comprising a central processing unit 105. The system 101 may further comprise a memory or memory location 110 (e.g., random-access memory, read-only memory, flash memory), an electronic storage unit 115 (e.g., hard disk), a communication interface 120 (e.g., network adapter) for communicating with one or more other systems (e.g., one or more robots and/or machines), and one or more peripheral devices 125, such as cache, other memory, data storage and/or electronic display adapters. The computer system 101 may be operatively coupled to a network 130 (or any servers accessible via the network 130) with the aid of the communication interface 120. In some embodiments, the computer system may include or be in communication with an electronic display 135 that comprises a user interface (UI) 140 for providing, for example, a portal for a user or operator to monitor or track (i) an operation of one or more robots and/or machines or any components of said robots and/or machines and/or (ii) a maintenance, service, or repair of the one or more robots and/or machines or components.

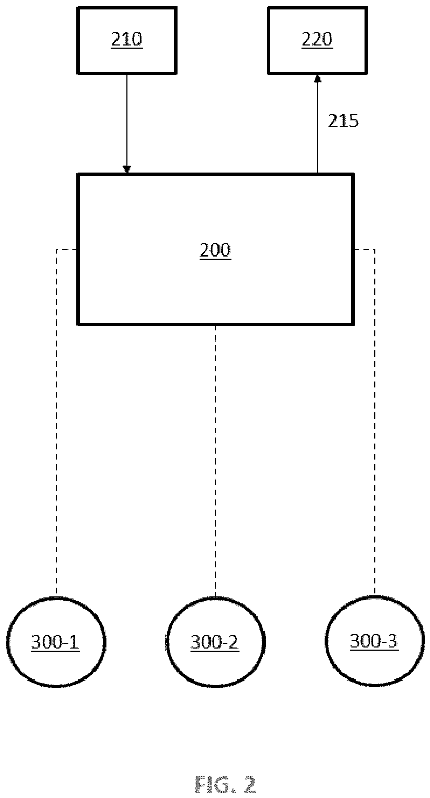

**FIG.** 2 schematically illustrates a central server 200 and a plurality of robots and/or machines 300-1, 300-2, and 300-3 that are in communication with the central server 200. The central server 200 may comprise or may be operatively coupled to the computer system 101 illustrated in FIG. 1. In some cases, the central server may be configured to receive operational data from the plurality of robots and/or machines 300-1,300-2, and 300-3. The plurality of robots and/or machines 300-1, 300-2, and 300-3 may be in communication with each other. Alternatively, the plurality of robots and/or machines 300-1, 300-2, and 300-3 may not or need not be in communication with each other.

The plurality of robots and/or machines 300-1, 300-2, and 300-3 may each comprise one or more sensors. The one or more sensors may be used to capture the operational data associated with the operation or the status of the plurality of robots and/or machines 300-1, 300-2, and 300-3.

The central server 200 may be configured to compare the operational data to one or more reference values or thresholds associated with the operation or the status of the one or more robots and/or machines or one or more components of the one or more robots and/or machines. In some cases, the central server 200 may be configured to receive the one or more reference values or thresholds from a memory module 210. The central server 200 may be configured to detect one or more changes or deviations in operation or expected behavior for the one or more robots and/or machines or the one or more components of the one or more robots and/or machines based at least in part on the comparison of the operational data to the one or more reference values or thresholds. The one or more changes or deviations may indicate or identify at least one robot and/or machine or component to be serviced, maintained, or replaced.

In some embodiments, the central server 200 may be configured to generate and transmit one or more maintenance or repair instructions 215 for the at least one robot and/or machine or component to one or more entities 220. The one or more entities 220 may comprise a repair or service technician or a maintenance provider. In some cases, the one or more entities 220 may comprise a maintenance or repair station.

In some cases, the one or more maintenance or repair instructions may be generated or transmitted based at least in part on a priority of maintenance associated with the at least one robot and/or machine or component. The priority of maintenance may be determined by the central server 200. For example, the priority of maintenance may be determined based on a level or severity of component wear or breakdown. The level or severity of component wear or breakdown may be determined based on a magnitude of the deviation between the robot's expected performance and the robot's actual performance. In some cases, the magnitude of the deviation may be determined by comparing the robot or machine's actual performance to one or more threshold values. In some cases, the level or severity of component wear or breakdown for one robot or machine may be determined relative to the level or severity of component wear or breakdown for another different robot (e.g., a robot or machine thatis more critical or instrumental to performing a certain task or service). In some cases, the level or severity of wear or breakdown for a first component may be adjusted relative to the level or severity of wear or breakdown for a second component. In some cases, the first component and the second component may be located on or associated with the same robot. In other cases, the first component and the second component may be located on or associated with different robots and/or machines.

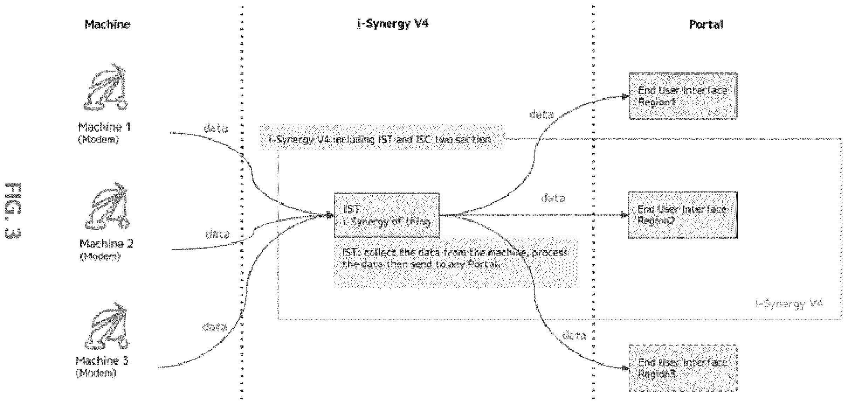

**FIG. 3** illustrates an exemplary platform for collecting and processing operational data of one or more robots or machines. The operational data of each robot or machine in a fleet may be transmitted to a central server or platform, which may be configured to collect and process the operational data. The operational data and/or any other information that can be derived from the processing of the operational data may be transmitted to one or more end user interfaces or portals to facilitate the monitoring and maintenance of various robots or machines within a fleet. In some cases, the central server or platform may comprise an IoT platform that synergizes the management of multiple robots in a fleet based on machine data obtained from one or more of the multiple robots in the fleet.

In any of the embodiments described herein, the multiple robots and/or machines may be configured to communicate with the central server or platform through a modem, which may have set access restrictions. In some cases, when a robot or machine obtains and uploads operational data, it may need to obtain an access token from the central server, and then encrypt the operational data. The central server or platform may then decrypt the data and store it in a database (e.g., a cloud database) for additional data processing.

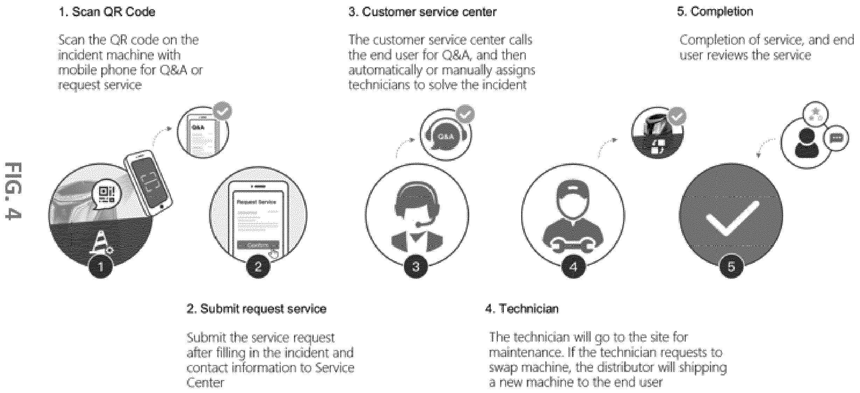

**FIG. 4** illustrates an exemplary process for servicing a robot or machine. The process may involve scanning a quick response (QR) code associated with a robot or machine or a component using a mobile device. The QR code may be scanned to initiate a Q&A session or to request service or maintenance.

In some cases, the user scanning the QR code may submit a service request after providing information on a change or deviation in robot performance or behavior. A customer service center may contact the end user for Q&A, and then automatically or manually assign a technician to resolve the incident. The technician may travel to the site where the robot or machine is located for maintenance. In some cases, if the technician requests to swap the robot or machine, the distributor may be informed so that the distributor can ship a new robot or machine to the end user. Once the machine or robot is serviced, or the replacement machine or robot is shipped to the end user, the end user may review the customer/field service provided.

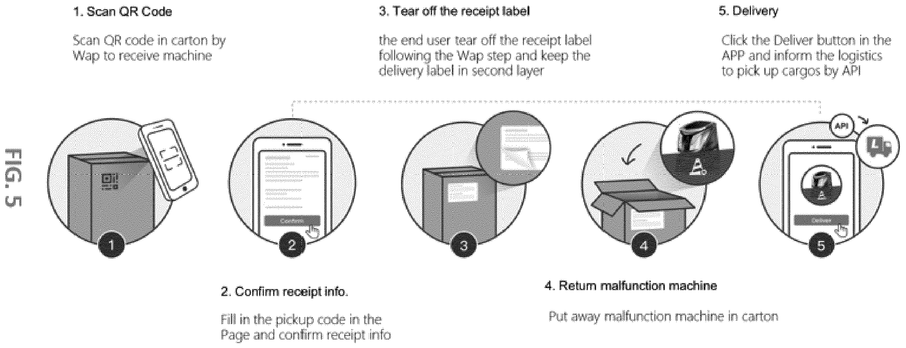

**FIG. 5** illustrates an exemplary process for swapping out a robot or machine. Initially, a user may scan a QR code on a carton or box that is sized and shaped to contain a robot or machine. The user may then confirm receipt of the carton or box by filling in a pickup code. The user may then tear off a receipt label and keep a delivery label associated with the carton or box. The user may then return a malfunctioning robot by placing the malfunctioning robot in the carton or box. The user may then use an application (e.g., a mobile application) to indicate that the malfunctioning robot is ready to be picked up for transport back to a manufacturer, a distributor, or a service technician.

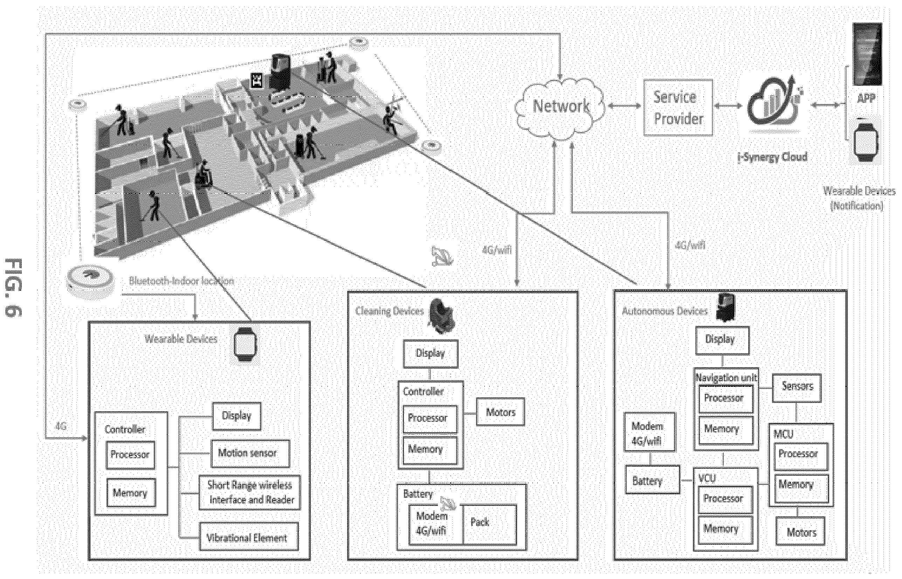

**FIG. 6** illustrates an exemplary system for managing a fleet of robots and/or machines. The system may comprise a cloud server that is in communication with one or more robots and/or machines via a wireless communication network. The cloud server may be operatively coupled to a plurality of robots or machines that are configured to operate in an environment. In some cases, the environment may be an indoor environment. The indoor environment may comprise, for example, a building. In some cases, the indoor environment may comprise an environment that supports wireless communications. In some embodiments, the one or more robots and/or machines may be configured to operate in and around peripheral areas of a building. In some embodiments, the one or more robots and/or machines may be configured to operate in an outdoor environment. The outdoor environment may be external to a building. The outdoor environment may include, for example, private roads and/or public roads.

In some cases, the plurality of robots or machines may comprise an autonomous device. The autonomous device may comprise an autonomous robot comprising a display, a navigation unit with a processor and a memory module, a VCU with a processor or memory module, one or more sensors, an MCU comprising a processor and memory, one or more motors, a battery, and a communication unit (e.g., a modem for 3G, 4G, 5G, bluetooth, or wifi-based communications). The sensors may be operatively coupled to the navigation unit and the MCU. The one or more motors may also be operatively coupled to the MCU. In some cases, the navigation unit may be operatively coupled to the VCU.

In some embodiments, the plurality of robots or machines may comprise one or more cleaning devices. The one or more cleaning devices may comprise a display, a controller comprising a processor and memory, one or more motors, a battery, and a communication unit (e.g., a modem for 3G, 4G, 5G, bluetooth, or wifi-based communications).

In some cases, one or more wearable devices may be worn by an operator of the robots or machines. The one or more wearable devices may comprise a controller with a processor and a memory, a display, a motion sensor for detecting a movement of the robot or the user operating the robot, a short range wireless communication interface, and a vibrational element for providing alerts or notifications to the user operating the robot.

In some cases, the autonomous devices, the cleaning devices, and the wearable devices may be in communication with a cloud server via a network. The network may permit a transmission of data between (i) a service provider or a cloud server and (ii) the autonomous devices, the cleaning devices, and the wearable devices. The service provider or cloud server may be configured to process data received from the autonomous devices, the cleaning devices, and/or the wearable devices. The service provider or cloud server may be configured to monitor or control an operation of the autonomous devices and/or the cleaning devices based on the operational data received from the autonomous devices or the cleaning devices. In some cases, the service provider or cloud server may be configured to provide one or more notifications to a user or an operator of the autonomous devices and/or the cleaning devices based on the operational data received from the autonomous devices or the cleaning devices. The one or more notifications may indicate, for example, that a change or deviation in expected robot performance or behavior has been detected, or that a variance in a planned motion logic of the robot has been identified. In some cases, the service provider or cloud server may interface with a mobile application or a web application to facilitate tracking of robot operation and/or the processing of fleet information/machine data.

### Methods

In another aspect, the present disclosure provides a method for managing one or more robots and/or machines. The methods described herein may be used to manage, control, and/or monitorrobots and/or machines. The terms robot(s) and machine(s) may be used interchangeably as described elsewhere herein. The method may comprise (a) receiving and processing operational data corresponding to an operation or a status of one or more robots at a central server that is in communication with the one or more robots or machines. In some cases, the processing of the operational data may comprise comparing (i) the operational data to (ii) one or more reference values or thresholds associated with the operation or the status of the one or more robots and/or machines or one or more components of the one or more robots and/or machines.

In some embodiments, the method may further comprise (b) detecting, based at least in part on the comparison in (a), one or more changes or deviations in operation or expected behavior for the one or more robots and/or machines or the one or more components of the one or more robots and/or machines. In some cases, the one or more changes or deviations may indicate or identify at least one robot and/or machines or component to be serviced, maintained, or replaced.

In some embodiments, the method may further comprise (c) generating and transmitting one or more maintenance or repair instructions for the at least one robot or component. The one or more maintenance or repair instructions may be generated based at least in part on a priority of maintenance associated with the at least one robot or machine or component. The one or more maintenance or repair instructions may be transmitted to a service technician, a maintenance service provider, or a repair station.

### Operational Data

The operational data may be gathered or obtained using one or more sensors of the one or more robots. In some cases, the one or more sensors may comprise a position sensor, a GPS unit, an encoder, an odometer, an accelerometer, an inertial measurement unit (IMU), a gyroscope, or a velocity sensor. In some cases, the one or more sensors may comprise, for example, a temperature sensor, a pressure sensor, a humidity sensor, or any other type of environmental sensor for sensing the conditions of the environment in which the one or more robots and/or machines are being operated. In some cases, the one or more sensors may comprise an optical sensor or a vision sensor. The optical sensor may comprise, for example, an imaging sensor or a camera. In some cases, the one or more sensors may comprise a lidar sensor, a vision sensor, a time of flight sensor (e.g., a 3D time of flight sensor), a binocular vision sensor, a stereoscopic vision sensor, or an ultrasound sensor.

In some embodiments, the operational data may be received from a single robot or machine or from multiple robots and/or machines. In some cases, the operational data may be received from multiple robots in series or sequentially. Alternatively, the operational data may be received from multiple robots simultaneously or concurrently.

In some cases, the operational data may comprise information on a geographical location of the one or more robots. In some cases, the operational data may comprise information on a position, an orientation, or a pose of the one or more robots and/or machines. In some cases, the operational data may comprise information on a spatial distribution of the one or more robots and/or machines across an area or an environment.

In some cases, the operational data may comprise information on a battery level or a charge status of the one or more robots and/or machines and/or the one or more components of the one or more robots and/or machines. The battery level or charge status may indicate how long the robot has been in operation, and how long the robot may continue operating before losing power.

In some cases, the operational data may comprise fault information or alarm information for the one or more robots and/or machines and/or the one or more components of the one or more robots and/or machines. In some cases, the fault information may be generated automatically by the one or more robots. In some cases, the fault information may be manually reported or generated by a user or an operator of the one or more robots and/or machines.

In some cases, the operational data may comprise information on work records, a cleaning path, or a cleaning performance for the one or more robots and/or machines. In some cases, the operational data may comprise information on a total time of use or operation for the one or more components.

In any of the embodiments described herein, the operational data may be periodically generated or compiled by the one or more robots and/or machines for transmission or upload to the central server. In any of the embodiments described herein, the operational data may be transmitted from the one or more robots and/or machines to the central server at one or more predetermined or periodic time intervals. In any of the embodiments described herein, the operational data may be transmitted from the one or more robots and/or machines to the central server at one or more time intervals that vary according to a historical usage or a total operational time of the one or more robots.

### Changes / Deviations

As described above, in some cases the method may comprise detecting one or more changes or deviations in operation or expected behavior for the one or more robots and/or machines or the one or more components of the one or more robots and/or machines, based at least in part on a comparison of (i) the operational data and (ii) one or more reference values or thresholds associated with the operation or the status of the one or more robots or one or more components of the one or more robots and/or machines. The one or more changes or deviations may comprise or correspond to one or more faults or failures for the one or more robots and/or machines or the one or more components of the one or more robots and/or machines.

In some cases, the one or more reference values or thresholds may correspond to a total operational time for the one or more robots and/or machines or the one or more components. In some non-limiting embodiments, the total operational time may be determined separately for each component or subs-system of a robot or machine.

In some embodiments, the method may comprise assigning one or more entities to service or maintain the at least one robot or machine or component based at least in part on the one or more changes or deviations detected. In some cases, the one or more entities may comprise one or more maintenance or service technicians.

### Maintenance / Repair Instructions

As described above, in some cases the method may comprise generating and transmitting one or more maintenance or repair instructions for at least one robot or component to be repaired, maintained, or serviced based at least in parton a priority of maintenance associated with the at least one robot or machine or component. Maintenance, service, or repair of the robots or the various components of the robots may be prioritized according to the schemes and methodologies described in further detail elsewhere herein.

In some embodiments, the maintenance or repair instructions may comprise, for example, instructions for a particular technician to undertake one or more operations to maintain or service the hardware or the software of a robot or machine. In some cases, the maintenance or repair instructions may include a target timeline or date specifying when the one or more maintenance or service operations should be completed by, or a time frame in which the one or more maintenance or service operations should be completed. In some cases, the maintenance or repair instructions may include instructions on how to maintain or repair the hardware or software components of a robot or machine. In some cases, the maintenance or repair instructions may comprise commands, algorithms, or computer logic that control the operation of a maintenance or service station to maintain or service a robot or machine.

In some embodiments, the one or more maintenance or repair instructions may be generated based on one or more pictures or videos provided by a user or an operator of the one or more robots or machines to the central server. In some cases, the one or more pictures or videos may indicate or show the one or more changes or deviations in operation or expected behavior for the one or more robots and/or machines or the one or more components of the one or more robots and/or machines.

In some embodiments, the one or more maintenance or repair instructions may be generated based on machine or component data collected by the one or more robots or machines. In some cases, the machine or component data may be collected using one or more sensors. The one or more sensors may be integrated with a robot or machine, or provided remotely or separately from the robot or machine. In some cases, the machine or component data may comprise information on battery level or usage, motor temperature, or current and voltage levels for the one or more robots or machine or the one or more components of the one or more robots and/or machines. In some cases, the one or more maintenance or repair instructions may be generated based on one or more predetermined parameters associated with the machine or component data. The one or more predetermined parameters may comprise a threshold, a limit, or a target value associated with battery level or usage, motor temperature, or current and voltage levels. The one or more predetermined parameters may inform a service technician as to what maintenance or repair procedures are needed to re-establish the normal, expected behavior or performance of a robot or machine or a component that is operating sub-optimally.

### Prioritization

In some embodiments, the method may further comprise prioritizing the one or more maintenance or repair instructions or adjusting the priority of maintenance based on the operational data. In some cases, the method may further comprise prioritizing the one or more maintenance or repair instructions or adjusting the priority of maintenance based on a condition or a state of the at least one component to be serviced or replaced. In some cases, the method may further comprise prioritizing the one or more maintenance or repair instructions or adjusting the priority of maintenance based on a level or a severity of component wear or breakdown.

In some embodiments, the method may further comprise adjusting the priority of maintenance for the at least one robot or machine or component based on (i) additional operational data received for the at least one robot or machine or component and/or (ii) additional operational data received for another robot or machine or component. For example, in some cases additional operational data may indicate that a component breakdown is not as severe as originally anticipated, or that another component is experiencing a more severe deviation in expected performance. In such cases, the priority of maintenance for that component may be reduced relative to a priority of maintenance for the other component. In another example, the additional operational data may indicate that another robot or machine is experiencing a more severe deviation in expected performance. In such cases, the priority of maintenance for one robot or machine may be decreased or increased relative to the priority of maintenance for another robot or machine. In some cases, the priority of maintenance/service/repair for a first component or robot or machine may be adjusted to account for the level or severity of wear, malfunction, or breakdown for a second component or robot or machine.

### Scannable Codes

In some embodiments, one or more scannable codes may be used to facilitate machine repair, servicing, and/or maintenance. The one or more scannable codes may be associated with or affixable to the one or more robots or machines or the one or more components of the one or more robots. In some cases, the one or more scannable codes may comprise one or more machine-specific or component-specific codes that are unique to the one or more robots or the one or more components of the one or more robots or machines. In some cases, the one or more scannable codes may comprise a bar code, a quick response (QR) code, an April tag, a unique identifier, or a serial number.

In some embodiments, the method may further comprise identifying or locating a service history for the one or more robots or machines or the one or more components of the one or more robots or machines when a user or an operator of the one or more robots or machines scans the one or more scannable codes. The service history may indicate prior actions taken by a service technician to repair or maintain a robot or machine, and/or any historical deviations or changes in robot behavior or performance that had been previously detected.

In any of the embodiments described herein, the central server may be configured to calculate and report a usage time for the one or more robots and/or machines and/or the one or more components of the one or more robots and/or machines when a service or maintenance technician scans the one or more scannable codes. The usage time may be provided directly to the service or maintenance technician via a display, a web application, or an application user interface. In some cases, the usage time may comprise statistics on machine or component usage as a function of time.

### Tracking

In some embodiments, the method may further comprise tracking and providing maintenance or service status information to a user or an operator of the one or more robots and or machines. In some cases, tracking and providing maintenance or service status information may comprise estimating an amount of time needed to maintain, repair, or service the at least one robot or machine or component. The estimated amount of time may be communicated to the user or the operator. The estimated amount of time may change based on a level of priority associated with the repair, servicing, or maintenance of one or more other robots or machines or components.

In some embodiments, the method may further comprise prioritizing the one or more maintenance or repair instructions or adjusting the priority of maintenance based on the estimated amount of time needed to maintain, repair, or service the at least one robot or machine or component, in order to reduce robot or machine downtime and maximize robot or machine operational time. In some cases, the maintenance or repair of a first robot or machine or component may be prioritized over the maintenance or repair of a second robot or machine or component if the first robot or machine or component can be quickly and easily repaired so that the first robot or machine can be redeployed.

### Replacement

In some cases, the method may further comprise providing or ordering a replacement robot or machine or one or more replacement components for a user or an operator of the one or more robots or machines experiencing the one or more changes or deviations. The replacement of robots or machines or components may be coordinated with the aid of one or more scannable codes, as described elsewhere herein. In some cases, once an order for a replacement robot or machine is submitted, a robot or machine selected as the replacement unit may undergo a configuration update procedure before the replacement robot or machine is shipped to the consumer or end user. Such configuration update procedure may involve updating the software or firmware of the replacement robot to the latest available or stable version.

In some embodiments, when a robot or machine is ordered, a supplier or distributor may scan a code associated with the order to obtain delivery information. The supplier or distributor may confirm that the robot or machine is in stock and scan a code or ID associated with the robot or machine to be delivered. Such scanning may result in the robot or machine being assigned to the order.

Once the robot or machine is delivered, a customer or end user may then scan the code or ID associated with the robot or machine and confirm receipt of the machine. In some cases, the customer or end user may provide a pickup code to confirm receipt. The pickup code may be provisioned by the supplier or distributor (or any agents thereof), and can be used to ensure that the robot or machine was delivered to and received by the correct customer or end user who originally placed the order. In some cases, the consumer or end user may scan the code or ID associated with the robot or machine to access training materials or guidance / reference materials for operating the robot or machine.

### Motion Paths

In some cases, the method may further comprise adjusting an operation of the one or more robots to compensate for or mitigate a suboptimal performance or operation of the at least one robot or component experiencing the one or more changes or deviations. In some cases, the method may further comprise adjusting one or more motion paths or cleaning routines for the one or more robots based on the one or more changes or deviations detected. In some cases, if a first robot is assigned to clean a target area and the first robot breaks down or malfunctions, a second robot in the fleet may be re-assigned or re-programmed to clean the target area.

### Software Updates

In some cases, the central server may be configured to provide one or more software updates to the one or more robots or machines to address or mitigate the one or more changes or deviations detected in robot or machine performance or behavior. In some cases, the one or more software updates may be provided as an over the air (OTA) software update.

Alternatively, the one or more maintenance or repair instructions may be provided to a software update server. The software update server may be configured to push one or more software updates to the one or more robots or machines to address or mitigate the one or more changes or deviations detected in robot or machine performance or behavior. The software updates pushed to the one or more robots or machines may be based on the one or more maintenance or repair instructions or the one or more detected changes or deviations in robot or machine operation or performance.

### Maintenance Station

In some cases, the one or more maintenance or repair instructions may be transmitted to a repair or maintenance station. The repair or maintenance station may comprise one or more tools or instruments that are usable to repair, maintain, or service various robots or machine components. In some cases, the one or more robots may be configured to autonomously travel to and/or interface with the repair or maintenance station in order to undergo one or more repair, maintenance, or service operations. In some cases, the robots may travel to and/or interface with the repair or maintenance station at a predetermined or scheduled time that is set based on the priority of maintenance associated with the robot or a malfunctioning component of the robot.

### Scheduling

In some cases, the method may comprise scheduling one or more service appointments for the one or more robots or machines based on (i) the operational data and/or (ii) a user request to schedule one ormore service or maintenance sessions. In some cases, the service appointments may be automatically scheduled based on the operational data for a robot or machine and a level of severity assigned to a faulty component of a robot or machine that is operating sub-optimally. In other cases, the service appointments may be manually scheduled based on a user's availability or preference.

### Customer Account and Finance Management

In some cases, the method may further comprise managing or updating a customer account associated with the one or more robots and/or machines based on the operational data processed by the central server, the one or more changes or deviations in operation or expected behavior detected, or the one or more maintenance or repair instructions generated. In some cases, the method may further comprise managing or updating financial information, payment information, or billing information associated with the one or more robots and/or machines based on the operational data processed by the central server, the one or more changes or deviations in operation or expected behavior detected, or the one or more maintenance or repair instructions generated.

### Machine Shut Down

In some cases, the central server may be configured to instruct the one or more robots and/or machines to automatically shut down or restrict a performance of one or more tasks or services when a change or deviation in robot operation or performance is detected. In some cases, the central server may be configured to instruct the one or more robots and/or machines to automatically shut down or restrict a performance of one or more tasks or services when a customer renting or leasing the one or more robots and/or machines misses a payment deadline or neglects to make a payment within a grace period associated with the payment deadline. In some cases, the central server may be configured to remotely activate or de-activate individual machines or robots based on operational data or financial considerations / factors associated with the rental or the lease of the individual machines or robots.

### Information Technology

The systems and methods disclosed herein may be implemented using one or more information technology (IT) systems. The IT systems may comprise, for example, a customer system that allows end users to view and monitor machine data. In some cases, the customer system may comprise a web application, a Wireless Application Protocol (WAP), a computer application, or a mobile application.

In some embodiments, the IT systems may further comprise a rental system for managing customer relations, field service, supply chain, and financial aspects of renting or leasing out various cleaning machines within a fleet. In some embodiments, the IT systems may further comprise an enterprise resource planning (ERP) system for managing procurement, finances, human resources, etc. The various IT systems may be interconnected and can facilitate the rental or leasing of fleet machines based on data transmitted to, from, or between the IT systems. Such data may include, for example, machine data captured by the machines or the operators using or managing the machines.

In some cases, machine data may be used to facilitate repair or maintenance of one or more machines or robots of a fleet. The repair and/or maintenance services may be coordinated using any one or more of the IT systems described above. The repair and/or maintenance services may be coordinated based on machine data, such as machine or product type, machine location, site or area of operation, map data used by or uploaded to the machine, cleaning reports for the machine or an area in which the machine is operated, cleaning KPIs, etc.

In some cases, access rights to machine data may be modified depending on the entity requesting access. For example, consumers may receive access to a selection of machine data that is different than the machine data transmitted from the machine to the various IT systems described herein.

### Computer Systems

In an aspect, the present disclosure provides computer systems that are programmed or otherwise configured to implement methods of the disclosure, e.g., any of the subject methods for fleet management. Referring back to **FIG. 1****,** a computer system 101 may be programmed or otherwise configured to implement a method for fleet management. The computer system 101 may be configured to, for example, receive and process operational data corresponding to an operation or a status of one or more robots or machines. The processing of the operational data may comprise comparing (i) the operational data to (ii) one or more reference values or thresholds associated with the operation or the status of the one or more robots and/or machines or one or more components of the one or more robots and/or machines. In some embodiments, the computer system 101 may be configured to detect one or more changes or deviations in robot operation or the expected behavior for the one or more robots and/or machines or the one or more components of the one or more robots and/or machines, based on the comparison of the operational data to the reference values or thresholds. In some cases, the one or more changes or deviations may indicate or identify at least one robot and/or machines or component to be serviced, maintained, or replaced. In some embodiments, the computer system 101 may be configured to generate and transmit one or more maintenance or repair instructions for the at least one robot or machine or componentbased atleastin parton a priority of maintenance associated with the at least one robot or machine or component. The computer system 101 can be an electronic device of a user or a computer system that is remotely located with respect to the electronic device. The electronic device can be a mobile electronic device.

The computer system 101 may include a central processing unit (CPU, also "processor" and "computer processor" herein) 105, which can be a single core or multi core processor, or a plurality of processors for parallel processing. The computer system 101 also includes memory or memory location 110 (e.g., random-access memory, read-only memory, flash memory), electronic storage unit 115 (e.g., hard disk), communication interface 120 (e.g., network adapter) for communicating with one or more other systems, and peripheral devices 125, such as cache, other memory, data storage and/or electronic display adapters. The memory 110, storage unit 115, interface 120 and peripheral devices 125 are in communication with the CPU 105 through a communication bus (solid lines), such as a motherboard. The storage unit 115 can be a data storage unit (or data repository) for storing data. The computer system 101 can be operatively coupled to a computer network ("network") 130 with the aid of the communication interface 120. The network 130 can be the Internet, an internet and/or extranet, or an intranet and/or extranet that is in communication with the Internet. The network 130 in some cases is a telecommunication and/or data network. The network 130 can include one or more computer servers, which can enable distributed computing, such as cloud computing. The network 130, in some cases with the aid of the computer system 101, can implement a peer-to-peer network, whichmay enabledevices coupled to the computer system 101 to behave as a client or a server.

The CPU 105 can execute a sequence of machine-readable instructions, which can be embodied in a program or software. The instructions may be stored in a memory location, such as the memory 110. The instructions can be directed to the CPU 105, which can subsequently program or otherwise configure the CPU 105 to implement methods of the present disclosure. Examples of operations performed by the CPU 105 can include fetch, decode, execute, and writeback.

The CPU 105 can be part of a circuit, such as an integrated circuit. One or more other components of the system 101 can be included in the circuit. In some cases, the circuit is an application specific integrated circuit (ASIC).

The storage unit 115 can store files, such as drivers, libraries and saved programs. The storage unit 115 can store user data, e.g., user preferences and user programs. The computer system 101 in some cases can include one or more additional data storage units that are located external to the computer system 101 (e.g., on a remote server that is in communication with the computer system 101 through an intranet or the Internet).

The computer system 101 can communicate with one or more remote computer systems through the network 130. For instance, the computer system 101 can communicate with a remote computer system of a user (e.g., an operator of a robot, an entity servicing, maintaining, or repairing a robot, etc.). Examples of remote computer systems include personal computers (e.g., portable PC), slate or tablet PC's (e.g., Apple^{®} iPad, Samsung^{®} Galaxy Tab), telephones, Smart phones (e.g., Apple^{®} iPhone, Android-enabled device, Blackberry^{®}), or personal digital assistants. The user can access the computer system 101 via the network 130.

Methods as described herein can be implemented by way of machine (e.g., computer processor) executable code stored on an electronic storage location of the computer system 101, such as, for example, on the memory 110 or electronic storage unit 115. The machine executable or machine readable code can be provided in the form of software. During use, the code can be executed by the processor 105. In some cases, the code can be retrieved from the storage unit 115 and stored on the memory 110 for ready access by the processor 105. In some situations, the electronic storage unit 115 can be precluded, and machine-executable instructions are stored on memory 110.

The code can be pre-compiled and configured for use with a machine having a processor adapted to execute the code, or can be compiled during runtime. The code can be supplied in a programming language that can be selected to enable the code to execute in a pre-compiled or as-compiled fashion.

Aspects of the systems and methods provided herein, such as the computer system 101, can be embodied in programming. Various aspects of the technology may be thought of as "products" or "articles of manufacture" typically in the form of machine (or processor) executable code and/or associated data that is carried on or embodied in a type of machine readable medium. Machine-executable code can be stored on an electronic storage unit, such as memory (e.g., read-only memory, random-access memory, flash memory) or a hard disk. "Storage" type media can include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer into the computer platform of an application server. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium, such as computer-executable code, may take many forms, including but not limited to, a tangible storage medium, a carrier wave medium or physical transmission medium. Non-volatile storage media including, for example, optical or magnetic disks, or any storage devices in any computer(s) or the like, may be used to implement the databases, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the formof electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The computer system 101 can include or be in communication with an electronic display 135 that comprises a user interface (UI) 140 for providing, for example, a portal for a user or operator to monitor or track an operation or a maintenance/service/repair of one or more robots and/or machines or components. The portal may be provided through an application programming interface (API). A user or entity can also interact with various elements in the portal via the UI. Examples of UI's include, without limitation, a graphical user interface (GUI) and web-based user interface.

Methods and systems of the present disclosure can be implemented by way of one or more algorithms. An algorithm can be implemented by way of software upon execution by the central processing unit 105. For example, the algorithm may be configured to (i) receive and process operational data corresponding to an operation or a status of one or more robots and/or machines, (ii) detect one or more changes or deviations in operation or expected behavior for the one or more robots and/or machines or the one or more components of the one or more robots and/or machines based on the comparison of the operational data to one or more reference values or thresholds, and (iii) generate and transmit one or more maintenance or repair instructions for the at least one robot or machine or component based at least in part on a priority of maintenance associated with the at least one robot or component.

While preferred embodiments of the present invention have been shown and described herein, it will be obvious to those skilled in the art that such embodiments are provided by way of example only. It is not intended that the invention be limited by the specific examples provided within the specification. While the invention has been described with reference to the aforementioned specification, the descriptions and illustrations of the embodiments herein are not meant to be construed in a limiting sense. Numerous variations, changes, and substitutions will now occur to those skilled in the art without departing from the invention. Furthermore, it shall be understood that all aspects of the invention are not limited to the specific depictions, configurations or relative proportions set forth herein which depend upon a variety of conditions and variables. It should be understood that various alternatives to the embodiments of the invention described herein may be employed in practicing the invention. It is therefore contemplated that the invention shall also cover any such alternatives, modifications, variations or equivalents. It is intended that the following claims define the scope of the invention and that methods and structures within the scope of these claims and their equivalents be covered thereby.

The disclosure of this application also includes the following numbered clauses:
1. A method, comprising:
   (a) receiving and processing operational data corresponding to an operation or a status of one or more robots and/or machines at a central server that is in communication with the one or more robots and/or machines, wherein the processing of the operational data comprises comparing (i) the operational data to (ii) one or more reference values or thresholds associated with the operation or the status of the one or more robots and/or machines or one or more components of the one or more robots and/or machines;
   (b) detecting, based at least in part on the comparison in (a), one or more changes or deviations in operation or expected behavior for the one or more robots and/or machines or the one or more components of the one or more robots and/or machines, wherein the one or more changes or deviations indicate or identify at least one robot or machine or component to be serviced, maintained, or replaced; and
   (c) generating and transmitting one or more maintenance or repair instructions for the at least one robot or machine or component based at least in part on a priority of maintenance associated with the at least one robot or machine or component.
2. The method of clause 1, wherein (c) further comprises prioritizing the one or more maintenance or repair instructions or adjusting the priority of maintenance based on the operational data.
3. The method of any preceding clause, wherein (c) further comprises prioritizing the one or more maintenance or repair instructions or adjusting the priority of maintenance based on a condition or a state of the at least one component to be serviced or replaced.
4. The method of any preceding clause, wherein (c) further comprises prioritizing the one or more maintenance or repair instructions or adjusting the priority of maintenance based on a level or a severity of component wear or breakdown.
5. The method of any preceding clause, further comprising, prior to (a), providing one or more scannable codes that are associated with or affixable to the one or more robots or machines or the one or more components of the one or more robots or machines.
6. The method of any preceding clause, further comprising, subsequent to (b), assigning one or more entities to service or maintain the at least one robot or machine or component based at least in part on the one or more changes or deviations detected in (b).
7. The method of clause 6, wherein the one or more entities comprise one or more maintenance or service technicians.
8. The method of clause 5, or any clause dependent thereon, further comprising identifying or locating a service history for the one or more robots or machines or the one or more components of the one or more robots or machines when a user or an operator of the one or more robots or machines scans the one or more scannable codes.
9. The method of clause 5, or any clause dependent thereon, wherein the one or more scannable codes comprise one or more machine-specific or component-specific codes that are unique to the one or more robots or machines or the one or more components of the one or more robots or machines.
10. The method of clause 5, or any clause dependent thereon, wherein the one or more scannable codes comprise a barcode, a quick response (QR) code, an April tag, a unique identifier, or a serial number.
11. The method of any preceding clause, wherein the operational data comprises information on a battery level or a charge status of the one or more robots or machines and/or the one or more components of the one or more robots or machines.
12. The method of any preceding clause, wherein the operational data comprises fault information or alarm information for the one or more robots or machines and/or the one or more components of the one or more robots or machines.
13. The method of clause 12, wherein the fault information is generated automatically by the one or more robots or machines.
14. The method of clause 12 or 13, wherein the fault information is manually reported or generated by a user or an operator of the one or more robots or machines.
15. The method of any preceding clause, wherein the operational data comprises information on work records, a cleaning path, or a cleaning performance for the one or more robots or machines.
16. The method of any preceding clause, wherein the operational data comprises a total time of use or operation for the one or more components.
17. The method of any preceding clause, wherein the operational data is periodically generated or compiled by the one or more robots or machines for transmission or upload to the central server.
18. The method of clause 17, wherein the operational data is transmitted from the one or more robots or machines to the central server at one or more predetermined or periodic time intervals.
19. The method of clause 18, wherein the operational data is transmitted from the one or more robots or machines to the central server at one or more time intervals that vary according to a historical usage or a total operational time of the one or more robots or machines.
20. The method of any preceding clause, wherein the one or more reference values or thresholds correspond to a total operational time for the one or more robots or machines or the one or more components.
21. The method of clause 20, wherein the total operational time is determined separately for each component of a robot or machine.
22. The method of any preceding clause, further comprising, subsequent to (b), adjusting an operation of the one or more robots or machines to compensate for or mitigate a suboptimal performance or operation of the at least one robot or machine or component experiencing the one or more changes or deviations.
23. The method of any preceding clause, further comprising, subsequent to (c), tracking and providing maintenance or service status information to a user or an operator of the one or more robots or machines.
24. The method of clause 23, wherein tracking and providing maintenance or service status information comprises estimating an amount of time needed to maintain, repair, or service the at least one robot or machine or component.
25. The method of clause 24, wherein (c) further comprises prioritizing the one or more maintenance or repair instructions or adjusting the priority of maintenance based on the estimated amount of time needed to maintain, repair, or service the at least one robot or machine or component in order to reduce robot or machine downtime and maximize robot or machine operational time.
26. The method of any preceding clause, further comprising, subsequent to (c), providing or ordering a replacement robot or machine or one or more replacement components for a user or an operator of the one or more robots or machines experiencing the one or more changes or deviations.
27. The method of any preceding clause, further comprising, subsequent to (c), adjusting the priority of maintenance for the at least one robot or machine or component based on (i) additional operational data received for the at least one robot or machine or component and/or (ii) additional operational data received for another robot or machine or component.
28. The method of any preceding clause, further comprising, subsequent to (c), adjusting one or more motion paths or cleaning routines for the one or more robots or machines based on the one or more changes or deviations detected in (b).
29. The method of any preceding clause, wherein the one or more changes or deviations comprise one or more faults or failures for the one or more robots or machines or the one or more components of the one or more robots or machines.
30. The method of any preceding clause, wherein (c) further comprises transmitting the one or more maintenance or repair instructions to the central server.
31. The method of clause 30, wherein the central server is configured to provide one or more software updates to the one or more robots or machines to address or mitigate the one or more changes or deviations detected in (b).
32. The method of any preceding clause, wherein (c) further comprises transmitting the one or more maintenance or repair instructions to a repair or maintenance station.
33. The method of clause 32, wherein the one or more robots or machines are configured to autonomously travel to and/or interface with the repair or maintenance station in order to receive or undergo one or more repair, maintenance, or service operations.
34. The method of any preceding clause, wherein the one or more maintenance or repair instructions are generated based on one or more pictures or videos provided from a user or an operator of the one or more robots or machines to the central server, wherein the one or more pictures or videos indicate or show the one or more changes or deviations in operation or expected behavior for the one or more robots or machines or the one or more components of the one or more robots or machines.
35. The method of any preceding clause, wherein the one or more maintenance or repair instructions are generated based on (i) robot or machine or component data collected by the one or more robots or machines using one or more sensors and/or (ii) one or more predetermined parameters associated with the robot or machine or component data.
36. The method of clause 35, wherein the machine or component data comprise information on battery level or usage, motor temperature, or current and voltage levels for the one or more robots or machines or the one or more components of the one or more robots or machines.
37. The method of any preceding clause, further comprising, subsequent to (b), scheduling one or more service appointments for the one or more robots or machines based on (i) the operational data and/or (ii) a user request to schedule one or more service or maintenance sessions.
38. The method of any preceding clause, wherein the one or more robots or machines comprise a cleaning robot or machine, an autonomous vehicle, a rover, a drone, a shuttle for transporting humans or objects, or a humanoid robot.
39. The method of any preceding clause, wherein the one or more robots or machines are configured to operate in an indoor environment or an outdoor environment, wherein the indoor environment or the outdoor environment comprises a building, a peripheral area of the building, a public road, or a private road.
40. The method of any preceding clause, wherein the central server is configured to instruct the one or more robots or machines to automatically shutdown or restrict a performance of one or more tasks or services when a customer renting or leasing the one or more robots or machines misses a payment deadline.
41. The method of any preceding clause, further comprising managing or updating a customer account associated with the one or more robots or machines based on the operational data processed in (a), the one or more changes or deviations in operation orexpected behavior detected in (b), or the one or more maintenance or repair instructions generated in (c).
42. The method of any preceding clause, further comprising managing or updating financial information, payment information, or billing information associated with the one or more robots or machines based on the operational data processed in (a), the one or more changes or deviations in operation or expected behavior detected in (b), or the one or more maintenance or repair instructions generated in (c).
43. The method of clause 5, or any clause dependent thereon, wherein the central server is configured to calculate and report a usage time for the one or more robots or machines and/or the one or more components of the one or more robots or machines when a service or maintenance technician scans the one or more scannable codes.
44. The method of any preceding clause, wherein the one or more robots or machines comprise one or more position sensors for sensing a position and/or an orientation of the one or more robots or machines.
45. The method of clause 44, wherein the operational data comprises information on the position and/or the orientation of the one or more robots or machines.

## Claims

1. A method, comprising:
(a) receiving and processing operational data corresponding to an operation or a status of one or more robots and/or machines at a central server that is in communication with the one or more robots and/or machines, wherein the processingof the operational data comprises comparing (i) the operational data to (ii) one or more reference values or thresholds associated with the operation or the status of the one or more robots and/or machines or one or more components of the one or more robots and/or machines;
(b) detecting, based at least in part on the comparison in (a), one or more changes or deviations in operation or expected behavior for the one or more robots and/or machines or the one or more components of the one or more robots and/or machines, wherein the one or more changes or deviations indicate or identify at least one robot or machine or component to be serviced, maintained, or replaced; and
(c) generating and transmitting one or more maintenance or repair instructions for the at least one robot or machine or component based at least in part on a priority of maintenance associated with the at least one robot or machine or component.

2. The method of claim 1, wherein (c) further comprises prioritizing the one or more maintenance or repair instructions or adjusting the priority of maintenance based on the operational data.

3. The method of any preceding claim, wherein (c) further comprises prioritizing the one or more maintenance or repair instructions or adjusting the priority of maintenance based on a condition or a state of the at least one component to be serviced or replaced.

4. The method of any preceding claim, further comprising, prior to (a), providing one or more scannable codes that are associated with or affixable to the one or more robots or machines or the one or more components of the one or more robots or machines.

5. The method of any preceding claim, further comprising, subsequent to (b), assigning one or more entities to service or maintain the at least one robot or machine or component based at least in part on the one or more changes or deviations detected in (b).

6. The method of any preceding claim, wherein the operational data comprises information on a battery level or a charge status of the one or more robots or machines and/or the one or more components of the one or more robots or machines.

7. The method of any preceding claim, wherein the operational data comprises fault information or alarm information for the one or more robots or machines and/or the one or more components of the one or more robots or machines.

8. The method of any preceding claim, wherein the operational data comprises information on work records, a cleaning path, or a cleaning performance for the one or more robots or machines, or a total time of use or operation for the one or more components.

9. The method of any preceding claim, wherein the operational data is periodically generated or compiled by the one or more robots or machines for transmission or upload to the central server.

10. The method of any preceding claim, wherein the one or more reference values or thresholds correspond to a total operational time for the one or more robots or machines or the one or more components.

11. The method of any preceding claim, further comprising, subsequent to (b), adjusting an operation of the one or more robots or machines to compensate for or mitigate a suboptimal performance or operation of the at least one robot or machine or component experiencing the one or more changes or deviations.

12. The method of any preceding claim, further comprising, subsequent to (c), tracking and providing maintenance or service status information to a user or an operator of the one or more robots or machines.

13. The method of claim 12, wherein (c) further comprises prioritizing the one or more maintenance or repair instructions or adjusting the priority of maintenance based on the estimated amount of time needed to maintain, repair, or service the at least one robot or machine or component in order to reduce robot or machine downtime and maximize robot or machine operational time.

14. The method of any preceding claim, further comprising, subsequent to (c), adjusting the priority of maintenance for the at least one robot or machine or component based on (i) additional operational data received for the at least one robot or machine or component and/or (ii) additional operational data received for another robot or machine or component.

15. The method of any preceding claim, further comprising, subsequent to (c), adjusting one or more motion paths or cleaning routines for the one or more robots or machines based on the one or more changes or deviations detected in (b).
